# EUROPEAN PATENT APPLICATION

(11) **EP 4 814 656 A1**
(43) Date of publication of application: **30.09.2026**
(21) Application number: 25201340.4
(22) Date of filing: 10.09.2025
(51) Int. Cl.: G06F 1/26

(54) **ELECTRONIC DEVICE AND METHOD AND SYSTEM FOR ENHANCING DRIVING CAPABILITY**

(30) Priority: 28.03.2025 CN 202510381262
(71) Applicant: Getac Technology Corporation, New Taipei City 221009 (TW)
(72) Inventor: CHEN, Yu-Ting, 11568 Taipei City (TW)
(74) Representative: Viering, Jentschura & Partner mbB Patent- und Rechtsanwälte

(57) **Abstract**

An electronic device includes an on/off unit, a buffer and a switch. The on/off unit is electrically connected to a controller, the buffer is electrically connected to the on/off unit, and the switch is electrically connected to the buffer and the controller. When the buffer is electrically connected to a docking station, the switch transmits a detection voltage to the controller, and the controller enables the buffer to turn on a power supply of the docking station through the on/off unit based on the detection voltage. With the electronic device, which is compatible with the existing docking station, the driving capability can be enhanced more effectively to normally turn on the power supply of the docking station.

## Description

### BACKGROUND

### Field of Invention

The disclosure relates to a hardware device and an operation method thereof, and more particularly to an electronic device and a method for enhancing driving capability.

### Description of Related Art

When an electronic device is connected to a docking station, the driving capability provided by the electronic device is limited, for example, the driving current is only 2mA, which often results in that the power supply of the docking station cannot be turned on normally in a low-temperature environment.

It is obvious that the above-mentioned existing electronic devices still have inconveniences and defects and need to be further improved. In order to solve the above problem, the relevant technical fields have been committed to finding solutions, but no suitable method has been developed for a long time. Therefore, how to more effectively enhance the driving capability to normally turn on the power supply of the docking station has become one of the most important research and development topics and an issue that urgently needs to be improved in the relevant fields.

### SUMMARY

The disclosure provide an electronic device and a method for enhancing driving capability to solve the problem in the prior art.

In some embodiments, the present disclosure provides an electronic device including an on/off unit, a buffer and a switch. The on/off unit is electrically connected to a controller. The buffer is electrically connected to the on/off unit. The switch is electrically connected to the buffer and the controller. When the buffer is electrically connected to a docking station, the switch transmits a detection voltage to the controller, and the controller enables the buffer to turn on a power supply of the docking station through the on/off unit based on the detection voltage.

In some embodiments of the present disclosure, the on/off unit includes a first circuit and a second circuit. The first circuit is electrically connected to the controller, and the second circuit is electrically connected to the first circuit and the buffer.

In some embodiments of the present disclosure, the controller in an initial state provides a voltage within a first voltage level range to the first circuit, the first circuit provides a voltage within a second voltage level range to the second circuit, and the second circuit provides a voltage within the first voltage level range to the buffer. The first voltage level range is different from the second voltage level range.

In some embodiments of the present disclosure, the first circuit includes a first resistor and a first transistor. A terminal of the first resistor is electrically connected to a voltage source. The first transistor is connected in series to the first resistor. A control terminal of the first transistor is electrically connected to the controller, a first terminal of the first transistor is electrically connected to another terminal of the first resistor, and a second terminal of the first transistor is grounded.

In some embodiments of the present disclosure, the second circuit includes a second resistor and a second transistor. A terminal of the second resistor is electrically connected to a voltage source. The second transistor is connected in series to the second resistor. A control terminal of the second transistor is electrically connected to the first terminal of the first transistor, a first terminal of the second transistor is electrically connected to another terminal of the second resistor and an input terminal of the buffer, and a second terminal of the second transistor is grounded.

In some embodiments of the present disclosure, the controller in an initial state provides a voltage within a first voltage level range to turn on the first transistor, to make a voltage at the first terminal of the first transistor to be within a second voltage level range to turn off the second transistor. The voltage source provides a voltage within the first voltage level range through the second resistor to the buffer. The first voltage level range is different from the second voltage level range.

In some embodiments of the present disclosure, when an output terminal of the buffer is electrically connected to the docking station, the controller activates an analog-to-digital conversion function to read a value of the detection voltage.

In some embodiments of the present disclosure, the controller determines a type of the docking station based on the value of the detection voltage.

In some embodiments of the present disclosure, after determining the type of the docking station, the controller provides a voltage within the second voltage level range to turn off the first transistor, and the voltage source provides a voltage within the first voltage level range through the first transistor to turn on the second transistor to make the voltage outputted by the buffer to be within the second voltage level range.

In some embodiments of the present disclosure, the buffer is a tri-state buffer. An input terminal of the tri-state buffer is electrically connected to the on/off unit. An output terminal of the tri-state buffer is electrically connected to the switch. When the output terminal of the tri-state buffer is electrically connected to the docking station, the switch transmits the detection voltage to the controller.

In some embodiments, the present disclosure provides a method for enhancing driving capability applied to an electronic device. The method for enhancing driving capability includes: transmitting a detection voltage to a controller of the electronic device through a switch of the electronic device when the electronic device is electrically connected to a docking station, wherein the switch is electrically connected to a buffer and the controller; and, enabling the buffer to turn on a power supply of the docking station through an on/off unit of the electronic device through the controller based on the detection voltage, wherein the on/off unit is electrically connected to the controller and the buffer.

In some embodiments of the present disclosure, the on/off unit includes a first circuit and a second circuit. The first circuit is electrically connected to the controller and the second circuit is electrically connected to the first circuit and the buffer. The method for enhancing driving capability further includes: detecting whether the electronic device is electrically connected to the docking station; and, when the electronic device is not electrically connected to the docking station, providing a voltage within a first voltage level range to the first circuit through the controller in an initial state, providing a voltage within a second voltage level range to the second circuit through the first circuit, and providing a voltage within the first voltage level range to the buffer through the second circuit, wherein the first voltage level range is different from the second voltage level range.

In some embodiments of the present disclosure, the method for enhancing driving capability further includes: when the electronic device is electrically connected to the docking station, continuing to provide the voltage within the first voltage level range to the first circuit through the controller, and activating an analog-to-digital conversion function through the controller to read a value of the detection voltage.

In some embodiments of the present disclosure, the method for enhancing driving capability further includes: determining a type of the docking station through the controller based on the value of the detection voltage.

In some embodiments of the present disclosure, the method for enhancing driving capability further includes: after determining the type of the docking station, providing a voltage within the second voltage level range to the first circuit through the controller, providing a voltage within the first voltage level range to the second circuit through the first circuit, and providing a voltage within the second voltage level range to the buffer through the second circuit.

In some embodiments, the present disclosure provides a system for enhancing driving capability including an electronic device and a docking station. The electronic device includes an on/off unit, a switch, a buffer and a controller. The switch is electrically connected to the buffer and the controller. The buffer is electrically connected to the on/off unit. The on/off unit is electrically connected to the controller. When the electronic device is electrically connected to the docking station, the switch transmits a detection voltage to the controller, and the controller enables the buffer to turn on a power supply of the docking station through the on/off unit based on the detection voltage.

In some embodiments of the present disclosure, the on/off unit includes a first circuit and a second circuit. The first circuit is electrically connected to the controller. The second circuit is electrically connected to the first circuit and the buffer. The controller detects whether the electronic device is electrically connected to the docking station. When the electronic device is not electrically connected to the docking station, the controller in an initial state provides a voltage within a first voltage level range to the first circuit, the first circuit provides a voltage within a second voltage level range to the second circuit, and the second circuit provides a voltage within the first voltage level range to the buffer, wherein the first voltage level range is different from the second voltage level range.

In some embodiments of the present disclosure, when the electronic device is electrically connected to the docking station, the controller continues to provide the voltage within the first voltage level range to the first circuit, and the controller activates an analog-to-digital conversion function to read a value of the detection voltage.

In some embodiments of the present disclosure, the controller determines a type of the docking station based on the value of the detection voltage.

In some embodiments of the present disclosure, after determining the type of the docking station, the controller provides a voltage within the second voltage level range to the first circuit, the first circuit provides a voltage within the first voltage level range to the second circuit, and the second circuit provides a voltage within the second voltage level range to the buffer.

In summary, the technical solution of the present disclosure has obvious advantages and beneficial effects compared with the prior art. With the electronic device and the method and system for enhancing driving capability of the present disclosure, which is compatible with the existing docking station, the driving capability can be enhanced more effectively to normally turn on the power supply of the docking station.

It is to be understood that both the foregoing general description and the following detailed description are demonstrated by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
FIG. 1 is a schematic diagram of a system for enhancing driving capability and an electronic device thereof according to an embodiment of the present disclosure,
FIG. 2 is a circuit diagram of a system for enhancing driving capability and an electronic device thereof according to an embodiment of the present disclosure; and
FIG. 3 is a flowchart of a method for enhancing driving capability according to an embodiment of the present disclosure.

### DETAILED DESCRIPTION

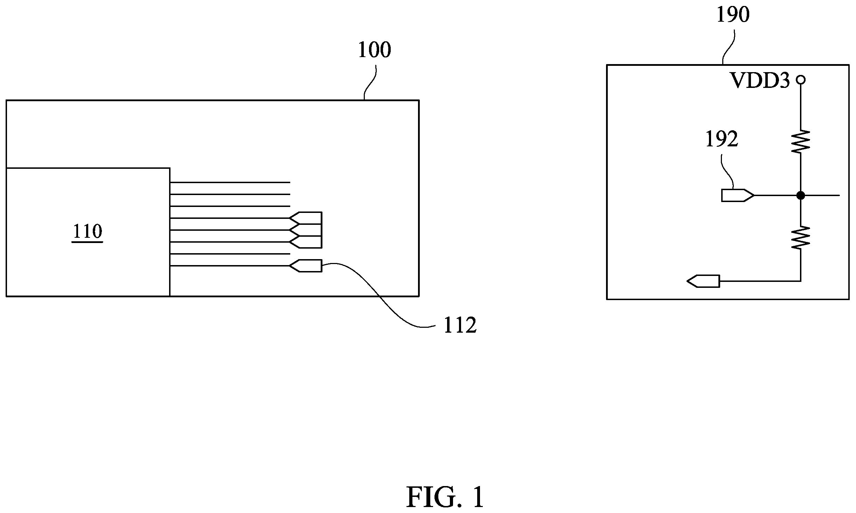

Please refer to FIG. 1. The technical embodiment of the present disclosure is a system for enhancing driving capability and an electronic device 100 thereof. The electronic device 100 can be applied to notebook computers or tablet computers, or can be widely used in related technical fields. The system for enhancing driving capability and the electronic device 100 thereof in the technical embodiment can achieve considerable technological progress and have broad industrial application value. The embodiment of the system for enhancing driving capability and the electronic device 100 thereof will be described as follows in conjunction with FIG. 1.

It should be understood that various embodiments of the system for enhancing driving capability and the electronic device 100 thereof are described in conjunction with FIG. 1. In the following description, many specific details are further set forth for the purpose of explanation to provide a comprehensive description of one or more embodiments. However, the disclosure can be implemented without these specific details. In other examples, the known structures and devices are shown in block diagram form for the purpose of effectively describing the embodiments. The term "for example" as used herein means "as an example, instance, or illustration" Any embodiments described herein as "for example" are not to be construed as preferred or superior to other embodiments.

FIG. 1 is a schematic diagram of a system for enhancing driving capability and an electronic device 100 thereof according to an embodiment of the present disclosure. As shown in FIG. 1, the system for enhancing driving capability can include the electronic device 100 and a docking station 190. In some embodiments of the present disclosure, when the electronic device 100 is connected to the docking station 190, the electronic device 100 relies on a controller 110 (embedded controller on the motherboard) to detect whether the docking station 190 is connected, thereby determining the type of the docking station 190 and turning on the power supply of the docking station 190.

The initial setting of the controller 110 is to read the voltage level and determine the type of docking station 190 via the pin 112 thereof (e.g., the analog-to-digital converter pin) connected to the pin 192 of the docking station 190, and after determining the type, the controller 110 transitions to provide a voltage within a second voltage level range (e.g., voltage of logic low level) to turn the power supply of the docking station 190.

The pin 192 of the docking station 190 is pulled up to the power supply VDD3 via a resistor. According to Ohm's law, there will be at least a certain degree of driving capability required. For example, if the power supply VDD3 is about 3.3V and the resistor is about 1k, the driving current will be required about 3mA or more, but it is not limited to this embodiment in the present disclosure.

It should be understood that the terms "approximately," "about," or "substantially" as used herein are intended to modify any quantity that may vary slightly, but such slight variations will not change the substance. If there is no special explanation in the embodiment, it means that the tolerance for the value modified by "approximately", "about" or "substantially" is generally allowed to be within 20%, preferably within 10%, and more preferably within 5%.

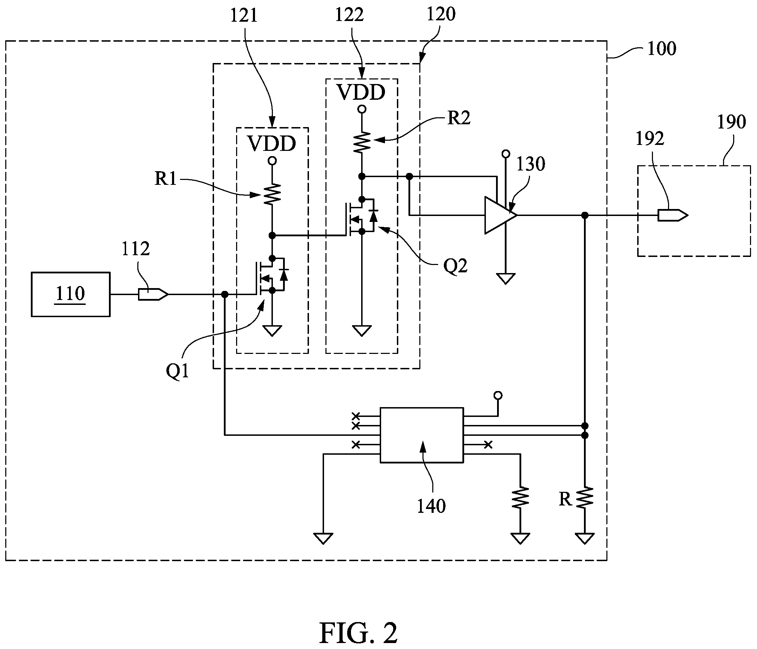

To further illustrate the mechanism of the above-mentioned electronic device 100 enhancing the driving capability of, please also refer to FIGs. 1 and 2. FIG. 2 is a circuit diagram of the system for enhancing driving capability and the electronic device 100 thereof according to an embodiment of the present disclosure. As shown in FIG. 2, the system for enhancing driving capability can include the docking station 190 and the electronic device 100, wherein the electronic device 100 includes an on/off unit 120, a buffer 130 and a switch 140.

Structurally, the on/off unit 120 is electrically connected to the controller 110, the buffer 130 is electrically connected to the on/off unit 120, and the switch 140 is electrically connected to the buffer 130 and the controller 110. It should be understood that in the embodiments and the claims, the description involving "electrically connected" may generally refer to a component being indirectly electrically coupled to another component through other component, or a component being directly electrically coupled to another component without going through other component. For example, an analog-to-digital converter built in the controller 110 is directly electrically coupled to the controller 110, or the controller 110 is indirectly electrically coupled to the analog-to-digital converter via an external circuit.

The electronic device 100 is connected to the docking station 190. When the buffer 130 is electrically connected to the docking station 190, the switch 140 transmits a detection voltage to the controller 110, and the controller 110 enables the buffer 130 to turn on the power supply of the docking station through the on/off unit 120 based on the detection voltage.

With regard to the structure of the on/off unit 120, in some embodiments of the present disclosure, the on/off unit 120 includes a first circuit 121 and a second circuit 122. Architecturally, the first circuit 121 is electrically connected to the controller 110, and the second circuit 122 is electrically connected to the first circuit 121 and the buffer 130.

With regard to the operation of the first circuit 121 and the second circuit 122, in some embodiments of the present disclosure, the controller 110 in an initial state provides a voltage within a first voltage level range (e.g., logical high level) to the first circuit 121, the first circuit 121 provides a voltage within a second voltage level range (e.g., logical low level) to the second circuit 122, and the second circuit 122 provides a voltage within the first voltage level range to the buffer 130, wherein the first voltage level range is different from the second voltage level range.

With regard to the structure of the first circuit 121, in some embodiments of the present disclosure, the first circuit 121 includes a first resistor R1 and a first transistor Q1. Architecturally, a terminal of the first resistor R1 is electrically connected to a voltage source VDD. The first transistor Q1 is connected in series to the first resistor R1. A control terminal (e.g., gate) of the first transistor Q1 is electrically connected to the controller 110. A first terminal (e.g., drain) of the first transistor Q1 is electrically connected to the other terminal of the first resistor R1. A second terminal (e.g., source) of the first transistor Q1 is grounded.

With regard to the structure of the second circuit 122, in some embodiments of the present disclosure, the second circuit 122 includes a second resistor R2 and a second transistor Q2. Architecturally, a terminal of the second resistor R2 is electrically connected to the voltage source VDD. The second transistor Q2 is connected in series to the second resistor R2. A control terminal (e.g., gate) of the second transistor Q2 is electrically connected to the first terminal of the first transistor Q1. A first terminal (e.g., drain) of the second transistor Q2 is electrically connected to the other terminal of the second resistor R2 and an input terminal of the buffer 130. A second terminal (e.g., source) of the second transistor Q2 is grounded.

With regard to the operation of the first transistor Q1 and the second transistor Q2, in some embodiments of the present disclosure, the controller 110 in an initial state provides a voltage within the first voltage level range (e.g., a voltage of logic high level) to turn on the first transistor Q1, so that the voltage at the first terminal of the first transistor Q1 falls within the second voltage level range to turn off the second transistor Q2, and the voltage source VDD provides a voltage within the first voltage level range to the buffer 130 through the second resistor R2, wherein the first voltage level range is different from the second voltage level range.

In some embodiments of the present disclosure, when the output terminal of the buffer 130 is electrically connected to the docking station 190, the controller 110 activates an analog-to-digital conversion function to read the value of the detection voltage.

In some embodiments of the present disclosure, the controller 110 determines the type of the docking station 190 based on the value of the detection voltage.

In some embodiments of the present disclosure, after determining the type of the docking station 190, the controller 110 provides a voltage within the second voltage level range to turn off the first transistor Q1, and the voltage source VDD provides a voltage within the first voltage level range through the first resistor R1 to turn on the second transistor Q2, so that the voltage outputted by the buffer 130 falls within the second voltage level range.

In some embodiments of the present disclosure, the buffer 130 is a tri-state buffer, the input terminal of the tri-state buffer is electrically connected to the on/off unit 120, and the output terminal of the tri-state buffer is electrically connected to the switch 140. When the output terminal of the tri-state buffer is electrically connected to the docking station 190, the switch 140 transmits the detection voltage to the controller 110.

For example, the output terminal of the buffer 130 is electrically connected to a resistor R. The resistor R is a large resistor (e.g., 1M) to prevent the switch 140 from malfunctioning, but it is not limited to this example in the present disclosure.

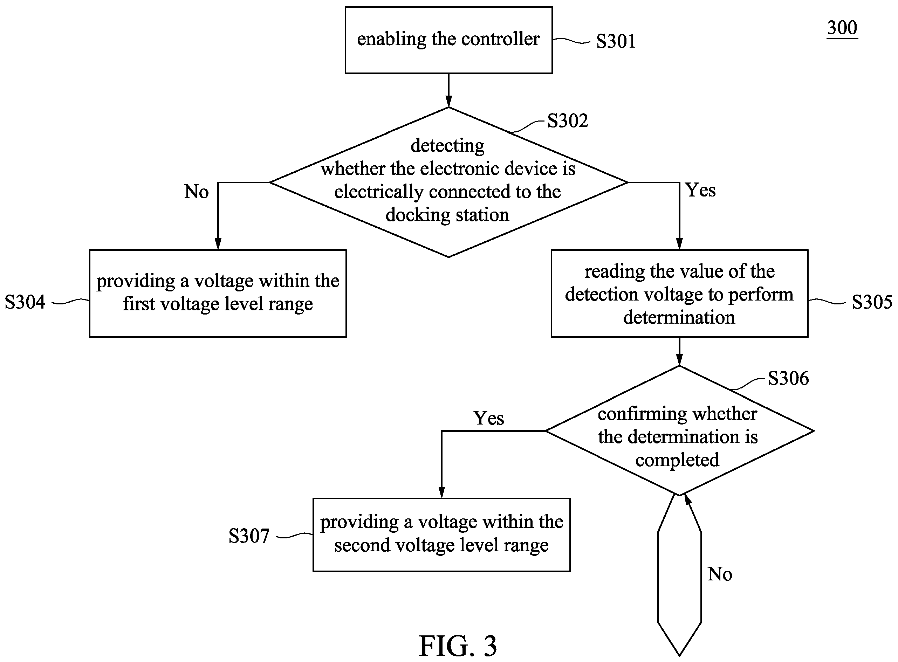

In order to further illustrate the specific process for the above-mentioned electronic device 100 enhancing the driving capability, please also refer to FIGs. 1-3. FIG. 3 is a flowchart of a method 300 for enhancing driving capability according to an embodiment of the present disclosure. As shown in FIG. 3, the method 300 for enhancing driving capability includes steps S301-S302 to S304-S307 (it should be understood that, unless a specific order is indicated, the order of the steps described in this embodiment can be adjusted according to actual requirements, and can even be performed at the same time or partially at the same time).

The method 300 for enhancing driving capability can take the form of a computer program product on a non-transitory computer-readable recording medium, wherein the computer-readable recording medium has a plurality of computer-readable instructions in the medium. A suitable recording medium can include any of the following: non-volatile memory such as ROM, PROM, EPROM and EEPROM; volatile memory such as SRAM, DRAM and DDR-RAM; optical storage device such as CD-ROM and DVD-ROM; and, magnetic storage device such as hard disk drive and floppy disk drive.

In some embodiments of the present disclosure, at step S301, the controller 110 of the electronic device 100 is enabled. At step S302, the controller 110 detects whether the electronic device 100 is electrically connected to the docking station 190. When the electronic device 100 is not electrically connected to the docking station 190, at step S304, the controller 110 provides a voltage within the first voltage level range to the on/off unit 120.

In particular, in some embodiments of the present disclosure, at step S303, when the electronic device 100 is not electrically connected to the docking station 190, a voltage within a first voltage level range is provided to the first circuit 121 through the controller 110 in an initial state, a voltage within a second voltage level range is provided to the second circuit 122 through the first circuit 121, and a voltage within the first voltage level range is provided to the buffer 130 through the second circuit 122, wherein the first voltage level range is different from the second voltage level range.

When the electronic device 100 is electrically connected to the docking station 190, a detection voltage is transmitted to the controller 110 of the electronic device 100 through the switch 140 of the electronic device 100; and, the controller 110 enables the buffer 130 to turn on the power supply of the docking station 190 through the on/off unit 120 of the electronic device 100 based on the detection voltage.

In particular, when the electronic device 100 is electrically connected to the docking station 190, at step S305, the voltage within the first voltage level range is continued to be provided to the first circuit 121 through the controller 110, the analog-to-digital conversion function is activated to read the value of the detection voltage through the controller 110, and the type of the docking station 190 is determined through the controller 110 based on the value of the detection voltage.

Next, at step S306, the controller 110 confirms whether the determination of the type of the docking station 190 is completed. After the type of the docking station 190 has been determined, at step S307, the controller 110 provides a voltage within the second voltage level range to the on/off unit 120.

In particular, in some embodiments of the present disclosure, after the controller 110 determines the type of the docking station 190, at step S307, a voltage within the second voltage level range is provided to the first circuit 121 through the controller 110, a voltage within the first voltage level range is provided to the second circuit 122 through the first circuit 121, and a voltage within the second voltage level range is provided to the buffer 130 through the second circuit 122.

In summary, the technical solution of the present disclosure has obvious advantages and beneficial effects compared with the prior art. With the electronic device 100 and the method 300 and system for enhancing driving capability of the present disclosure, which is compatible with the existing docking station 190, the driving capability can be enhanced more effectively to normally turn on the power supply of the docking station 190.

## Claims

1. An electronic device (100), comprising:
an on/off unit (120), electrically connected to a controller (110);
a buffer (130), electrically connected to the on/off unit; and
a switch (140), electrically connected to the buffer and the controller, wherein when the buffer is electrically connected to a docking station (190), the switch transmits a detection voltage to the controller, and the controller enables the buffer to turn on a power supply of the docking station through the on/off unit based on the detection voltage.

2. The electronic device according to claim 1, wherein the on/off unit comprises:
a first circuit (121), electrically connected to the controller; and
a second circuit (122), electrically connected to the first circuit and the buffer.

3. The electronic device according to claim 2, wherein the controller in an initial state provides a voltage within a first voltage level range to the first circuit, the first circuit provides a voltage within a second voltage level range to the second circuit, and the second circuit provides a voltage within the first voltage level range to the buffer, and the first voltage level range is different from the second voltage level range.

4. The electronic device according to claim 2 or 3, wherein the first circuit comprises:
a first resistor (R1), a terminal of the first resistor being electrically connected to a voltage source (VDD); and
a first transistor (Q1), connected in series to the first resistor, a control terminal of the first transistor being electrically connected to the controller, a first terminal of the first transistor being electrically connected to another terminal of the first resistor, and a second terminal of the first transistor being grounded.

5. The electronic device according to claim 4, wherein the second circuit comprises:
a second resistor (R2), a terminal of the second resistor being electrically connected to the voltage source (VDD); and
a second transistor (Q2), connected in series to the second resistor, a control terminal of the second transistor being electrically connected to the first terminal of the first transistor, a first terminal of the second transistor being electrically connected to another terminal of the second resistor and an input terminal of the buffer, and a second terminal of the second transistor being grounded.

6. The electronic device according to claim 5, wherein the controller in an initial state provides a voltage within a first voltage level range to turn on the first transistor, to make a voltage at the first terminal of the first transistor to be within a second voltage level range to turn off the second transistor, the voltage source provides a voltage within the first voltage level range through the second resistor to the buffer, and the first voltage level range is different from the second voltage level range.

7. The electronic device according to claim 6, wherein when an output terminal of the buffer is electrically connected to the docking station, the controller activates an analog-to-digital conversion function to read a value of the detection voltage.

8. The electronic device according to claim 7, wherein the controller determines a type of the docking station based on the value of the detection voltage.

9. The electronic device according to claim 8, wherein after determining the type of the docking station, the controller provides a voltage within the second voltage level range to turn off the first transistor, and the voltage source provides a voltage within the first voltage level range through the first resistor to turn on the second transistor to make the voltage outputted by the buffer to be within the second voltage level range.

10. A method (300) for enhancing driving capability, applied to an electronic device (100), the method comprising:
transmitting a detection voltage to a controller (110) of the electronic device through a switch (140) of the electronic device when the electronic device is electrically connected to a docking station (190), wherein the switch is electrically connected to a buffer (130) and the controller; and
enabling the buffer to turn on a power supply of the docking station through an on/off unit (120) of the electronic device through the controller based on the detection voltage, wherein the on/off unit is electrically connected to the controller and the buffer.

11. The method for enhancing driving capability according to claim 10, wherein the on/off unit comprises a first circuit (121) and a second circuit (122), the first circuit is electrically connected to the controller, the second circuit is electrically connected to the first circuit and the buffer, the method for enhancing driving capability further comprises:
detecting whether the electronic device is electrically connected to the docking station (S302); and
when the electronic device is not electrically connected to the docking station, providing a voltage within a first voltage level range to the first circuit through the controller in an initial state, providing a voltage within a second voltage level range to the second circuit through the first circuit, and providing a voltage within the first voltage level range to the buffer through the second circuit (S304), wherein the first voltage level range is different from the second voltage level range.

12. The method for enhancing driving capability according to claim 11, further comprising:
when the electronic device is electrically connected to the docking station, continuing to provide the voltage within the first voltage level range to the first circuit through the controller, and activating an analog-to-digital conversion function through the controller to read a value of the detection voltage (S305).

13. The method for enhancing driving capability according to claim 12, further comprising:
determining a type of the docking station through the controller based on the value of the detection voltage (S305).

14. The method for enhancing driving capability according to claim 13, further comprising:
after determining the type of the docking station, providing a voltage within the second voltage level range to the first circuit through the controller, providing a voltage within the first voltage level range to the second circuit through the first circuit, and providing a voltage within the second voltage level range to the buffer through the second circuit (S306).

15. A system for enhancing driving capability, comprising:
an electronic device (100), comprising an on/off unit (120), a switch (140), a buffer (130) and a controller (110), the switch being electrically connected to the buffer and the controller, the buffer being electrically connected to the on/off unit, and the on/off unit being electrically connected to the controller; and
a docking station (190), wherein when the electronic device is electrically connected to the docking station, the switch transmits a detection voltage to the controller, and the controller enables the buffer to turn on a power supply of the docking station through the on/off unit based on the detection voltage.

## Amended claims

### Amended claims in accordance with Rule 137(2) EPC.

1. An electronic device (100) configured to be electrically connected to a docking station (190) for being supplied with power, the electronic device (100) comprising:
an on/off unit (120), electrically connected to a controller (110);
a buffer (130), electrically connected to the on/off unit; and
a switch (140), electrically connected to the buffer and the controller, wherein the switch is configured to transmit, when the buffer is electrically connected to the docking station (190), a detection voltage to the controller, and the controller is configured to enable the buffer to turn on a power supply of the docking station through the on/off unit based on the detection voltage.

2. The electronic device according to claim 1, wherein the on/off unit comprises:
a first circuit (121), electrically connected to the controller; and
a second circuit (122), electrically connected to the first circuit and the buffer.

3. The electronic device according to claim 2, wherein the controller in an initial state is configured to provide a voltage within a first voltage level range to the first circuit, the first circuit is configured to provide a voltage within a second voltage level range to the second circuit, and the second circuit is configured to provide a voltage within the first voltage level range to the buffer, and the first voltage level range is different from the second voltage level range.

4. The electronic device according to claim 2 or 3, wherein the first circuit comprises:
a first resistor (R1), a terminal of the first resistor being electrically connected to a voltage source (VDD); and
a first transistor (Q1), connected in series to the first resistor, a control terminal of the first transistor being electrically connected to the controller, a first terminal of the first transistor being electrically connected to another terminal of the first resistor, and a second terminal of the first transistor being grounded.

5. The electronic device according to claim 4, wherein the second circuit comprises:
a second resistor (R2), a terminal of the second resistor being electrically connected to the voltage source (VDD); and
a second transistor (Q2), connected in series to the second resistor, a control terminal of the second transistor being electrically connected to the first terminal of the first transistor, a first terminal of the second transistor being electrically connected to another terminal of the second resistor and an input terminal of the buffer, and a second terminal of the second transistor being grounded.

6. The electronic device according to claim 5, wherein the controller in an initial state is configured to provide a voltage within a first voltage level range to turn on the first transistor, to make a voltage at the first terminal of the first transistor to be within a second voltage level range to turn off the second transistor, the voltage source being configured to provide a voltage within the first voltage level range through the second resistor to the buffer, and wherein the first voltage level range is different from the second voltage level range.

7. The electronic device according to claim 6, wherein the controller is configured to activate, when an output terminal of the buffer is electrically connected to the docking station, an analog-to-digital conversion function to read a value of the detection voltage.

8. The electronic device according to claim 7, wherein the controller determines a type of the docking station based on the value of the detection voltage.

9. The electronic device according to claim 8, wherein the controller is configured to provide, after determining the type of the docking station, a voltage within the second voltage level range to turn off the first transistor, and the voltage source is configured to provide a voltage within the first voltage level range through the first resistor to turn on the second transistor to make the voltage outputted by the buffer to be within the second voltage level range.

10. A method (300) for enhancing driving capability, applied to an electronic device (100), the method comprising:
electrically connecting the electronic device (100) to a docking station (190) for receiving power therefrom;
transmitting a detection voltage to a controller (110) of the electronic device through a switch (140) of the electronic device, wherein the switch is electrically connected to a buffer (130) and the controller; and
enabling the buffer to turn on a power supply of the docking station through an on/off unit (120) of the electronic device through the controller based on the detection voltage, wherein the on/off unit is electrically connected to the controller and the buffer.

11. The method for enhancing driving capability according to claim 10, wherein the on/off unit comprises a first circuit (121) and a second circuit (122), the first circuit is electrically connected to the controller, the second circuit is electrically connected to the first circuit and the buffer, the method for enhancing driving capability further comprises:
detecting whether the electronic device is electrically connected to the docking station (S302); and
when the electronic device is not electrically connected to the docking station, providing a voltage within a first voltage level range to the first circuit through the controller in an initial state, providing a voltage within a second voltage level range to the second circuit through the first circuit, and providing a voltage within the first voltage level range to the buffer through the second circuit (S304), wherein the first voltage level range is different from the second voltage level range.

12. The method for enhancing driving capability according to claim 11, further comprising:
when the electronic device is electrically connected to the docking station, continuing to provide the voltage within the first voltage level range to the first circuit through the controller, and activating an analog-to-digital conversion function through the controller to read a value of the detection voltage (S305).

13. The method for enhancing driving capability according to claim 12, further comprising:
determining a type of the docking station through the controller based on the value of the detection voltage (S305).

14. The method for enhancing driving capability according to claim 13, further comprising:
after determining the type of the docking station, providing a voltage within the second voltage level range to the first circuit through the controller, providing a voltage within the first voltage level range to the second circuit through the first circuit, and providing a voltage within the second voltage level range to the buffer through the second circuit (S306).

15. A system for enhancing driving capability, comprising:
an electronic device (100) according to claim 1; and
a docking station (190), wherein when the electronic device is electrically connected to the docking station, the switch transmits a detection voltage to the controller, and the controller enables the buffer to turn on a power supply of the docking station through the on/off unit based on the detection voltage.
